# EUROPEAN PATENT APPLICATION

(11) **EP 3 168 731 A1**
(43) Date of publication of application: **17.05.2017**
(21) Application number: 15818622.1
(22) Date of filing: 08.04.2015
(51) Int. Cl.: G06F 3/0487

(54) **TERMINAL, TERMINAL DECRYPTION METHOD, AND STORAGE MEDIUM**

(30) Priority: 10.07.2014 CN 201410328813
(71) Applicant: Xi'an Zhongxing New Software Co. Ltd., Xian, Shaanxi 710114 (CN)
(72) Inventor: ZHANG, Muhui, Xian Shaanxi 710114 (CN); LI, Yun, Xian Shaanxi 710114 (CN); ZHAO, Jin, Xian Shaanxi 710114 (CN)
(74) Representative: Awapatent AB
(86) International application number: PCT/CN2015/076037
(87) International publication number: WO 2016/004777

(57) **Abstract**

Embodiments of the present invention disclose a terminal, a method for decrypting a terminal and a storage medium. The method includes that: when the terminal is in an encrypted state, the terminal receives a first proximity state sequence of a first object within a first time threshold value; the terminal compares the first proximity state sequence with a preset reference proximity state sequence; and when the first proximity state sequence is as same as the preset reference proximity state sequence, the terminal is changed from the encrypted state into a decrypted state.

## Description

### Technical Field

The present invention relates to an information security technology for terminals, and more particularly, to a terminal, a method for decrypting a terminal and a storage medium.

### Background

Along with development of a communication technology, a mobile terminal gradually becomes an indispensable assistant in people's life, and a security problem of the mobile terminal also becomes increasingly serious. For example, a user is usually required to perform a specific operation on a touch screen to unlock a mobile terminal in a screen locked state, and such an operation easily attracts attentions, thereby the unlocking operation is easy for others to obtain. In addition, when an encrypted file stored in the terminal is decrypted, a character string the same as a preset password is usually input for decryption, and in such a manner, the password is easily leaked, thereby bringing a hidden danger to information security of the mobile terminal.

### Summary of the Invention

To solve the abovementioned technical problem, an embodiment of the present invention is expected to provide a terminal and a method for decrypting a terminal, which can improve information security of a mobile terminal.

The technical solutions of the present invention are implemented as follows.

On a first aspect, an embodiment of the present invention provides a method for decrypting a terminal, the method including the following steps.

When in an encrypted state, a terminal receives a first proximity state sequence of a first object within a first time threshold value. Herein, the first proximity state sequence includes proximity states arranged according to an acquisition order of the terminal and durations corresponding to the proximity states.

The terminal compares the first proximity state sequence with a preset reference proximity state sequence. Herein, the preset reference proximity state sequence includes proximity states arranged according to a preset order and durations corresponding to the proximity states.

When the first proximity state sequence is as same as the preset reference proximity state sequence, the terminal is changed from the encrypted state into a decrypted state.

According to a first possible implementation mode, in combination with the first aspect, the proximity states in the first proximity state sequence include a state that a distance between the first object and the terminal is smaller than a first distance threshold value and/or a state that the distance between the first object and the terminal is larger than the first distance threshold value.

According to a second possible implementation mode, in combination with the first possible implementation mode, the step that the terminal compares the first proximity state sequence with the preset reference proximity state sequence includes that the following operations.

The terminal searches for a first mapping relationship to obtain password signals represented by the proximity states and the durations corresponding to the proximity states according to the proximity states and durations corresponding to the proximity states in the first proximity state sequence, and combines the password signals into a first password signal flow according to an order of the proximity states in the first proximity state sequence. Herein, the first mapping relationship is a corresponding relationship between the proximity states and the durations corresponding to the proximity states, and the password signals.

The first password signal flow is compared with a preset reference password signal flow. Herein, the preset reference password signal flow is obtained by searching for reference proximity states and durations corresponding to the reference proximity states in the reference proximity state sequence by the terminal according to the first mapping relationship.

According to a third possible implementation mode, in combination with the first aspect, after the step that the terminal receives a first proximity state sequence of a first object within a first time threshold value, the method also includes that the following operations.

The terminal confirms that reception of the first proximity state sequence is completed. Herein, the step that the terminal confirms that reception of the first proximity state sequence is completed includes that:
the terminal prompts a reception confirmation message, herein, the reception confirmation message is used to request for confirming that reception of the first proximity state sequence is completed; and
after the terminal receives a confirmation response message, the terminal confirms that reception of the first proximity state sequence is completed. Herein, the confirmation response message is used to respond to the reception confirmation message.

According to a fourth possible implementation mode, in combination with the first aspect, that the terminal is in the encrypted state includes that: the terminal is in a screen locked state, any file in the terminal is in the encrypted state and any application program in the terminal is in the encrypted state; and
correspondingly, the step that the terminal is changed from the encrypted state into the decrypted state includes that: the terminal unlocks a screen, any file in the terminal is in the decrypted state, and any application program in the terminal is in the decrypted state.

On a second aspect, the embodiment of the present invention provides a terminal. Herein, the terminal includes: a proximity sensor, a processor and a memory.

The proximity sensor is arranged to, when in an encrypted state, receive a first proximity state sequence of a first object within a first time threshold value set by the processor, and transmit the first proximity state sequence to the processor. Herein, the first proximity state sequence includes proximity states arranged according to an acquisition order of the terminal and durations corresponding to the proximity states.

The memory is arranged to store a preset reference proximity state sequence. Herein, the preset reference proximity state sequence includes proximity states arranged according to a preset order and durations corresponding to the proximity states.

The processor is arranged to compare the first proximity state sequence transmitted by the proximity sensor with the reference proximity state sequence stored by the memory, and
when the first proximity state sequence is as same as the preset reference proximity state sequence, change the terminal from the encrypted state into a decrypted state.

According to a first possible implementation mode, in combination with the second aspect, the proximity states in the first proximity state sequence include a state that a distance between the first object and the terminal is smaller than a first distance threshold value and/or a state that the distance between the first object and the terminal is larger than the first distance threshold value.

According to a second possible implementation mode, in combination with the first possible implementation mode,
the memory is also arranged to store a first mapping relationship. Herein, the first mapping relationship is a corresponding relationship between the proximity states and the durations corresponding to the proximity states, and password signals; and
the processor is arranged to search for the first mapping relationship to obtain the password signals represented by the proximity states and the durations corresponding to the proximity states according to the proximity states and durations corresponding to the proximity states in the first proximity state sequence, combine the password signals into a first password signal flow according to an order of the proximity states in the first proximity state sequence, and
compare the first password signal flow with a preset reference password signal flow. Herein, the preset reference password signal flow is obtained by searching for reference proximity states and durations corresponding to the reference proximity states in the reference proximity state sequence by the processor according to the first mapping relationship.

According to a third possible implementation mode, in combination with the second aspect, the processor is also arranged to confirm that reception of the first proximity state sequence is completed.

Specifically, the terminal also includes a communication interface, arranged to perform communication interaction with the outside.

The processor is arranged to prompt a reception confirmation message through the communication interface, herein the reception confirmation message is used to request for confirming that reception of the first proximity state sequence is completed, and
after receiving a confirmation response message through the communication interface, confirm that reception of the first proximity state sequence is completed. Herein, the confirmation response message is used to respond to the reception confirmation message.

A storage medium is provided, and a computer program is stored in the storage medium, and the computer program is arranged to execute the abovementioned method for decrypting a terminal.

Embodiments of the present invention provide a terminal, a method for decrypting a terminal and the storage medium. Proximity and distant states of an external object are acquired through the proximity sensor, and a decryption operation is performed on the encrypted terminal according to the acquired proximity and distant states of the external object, so that information security of the terminal can be improved.

### Description of Drawings

FIG. 1 is a flowchart of a method for decrypting a terminal according to an embodiment of the present invention.
FIG. 2 is a structure diagram of a terminal according to an embodiment of the present invention.
FIG. 3 is a structure diagram of another terminal according to an embodiment of the present invention.

### Specific Embodiments

The technical solutions in embodiments of the present invention will be clearly and completely described below in combination with the drawings in the embodiments of the present invention.

A proximity sensor is widely applied to an intelligent terminal. Usually, the proximity sensor located at a front panel part of an intelligent terminal emits infrared light through an infrared emitter, and then detects an amount of infrared light, which is reflected back, through an infrared detector inside the proximity sensor. When there is an object on an infrared emission path, most of infrared rays are reflected back to the infrared detector inside the proximity sensor, and the infrared detector may judge the amount of the received infrared rays, which are reflected back, to determine a proximity or distant state of the object.

A basic idea of the embodiment of the present invention is to acquire proximity and distance states of an external object through the proximity sensor and perform a decryption operation on an encrypted terminal according to the acquired proximity and distant states of the external object.

It should be illustrated that the terminal in embodiments of the present invention may include an intelligent mobile phone, a tablet computer, an electronic book reader, a Personal Digital Assistant PDA, a Point of Sales POS, an onboard computer, a Moving Picture Experts Group Audio Layer III MP3 player, a Moving Picture Experts Group Audio Layer IV MP4 player, a portable laptop computer, a desktop computer and the like, which will not be specifically limited in embodiments of the present invention.

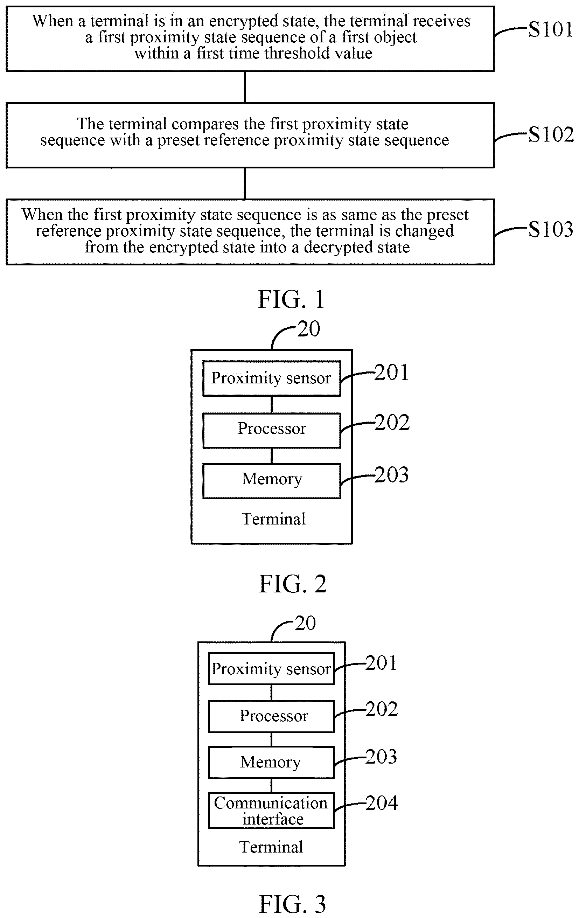

On the basis of the abovementioned basic idea, referring to FIG. 1, it shows a flow of a method for decrypting a terminal according to an embodiment of the present invention. The method may include steps below.

In step S101, when a terminal is in an encrypted state, the terminal receives a first proximity state sequence of a first object within a first time threshold value.

Exemplarily, the first proximity state sequence includes proximity states arranged according to an acquisition order of the terminal and durations corresponding to the proximity states. The proximity states in the first proximity state sequence may include a state that a distance between the first object and the terminal is smaller than a first distance threshold value and/or a state that the distance between the first object and the terminal is larger than the first distance threshold value. It can be understood that the state that the distance between the first object and the terminal is smaller than the first distance threshold value may also be called a proximity state of the first object. Besides, the state that the distance between the first object and the terminal is larger than the first distance threshold value may be called a distant state of the first object.

Specifically in the present embodiment, within the first time threshold value, the terminal may measure the proximity and distant states of the first object through a proximity sensor of the terminal itself, and may also measure durations of the proximity and distant states of the first object respectively. Then, the proximity and distant states, measured by the proximity sensor, of the first object and the durations corresponding to the proximity and distant states of the first object are arranged according to an order obtained by the measurement of the proximity sensor, thereby obtaining the first proximity state sequence of the first object. In an exemplary embodiment, the proximity and distant states of the first object and the durations corresponding to the proximity and distant states of the first object may be represented by parameter pairs.

For example, in the embodiment, the first object may be a finger of a user, and the proximity sensor of the terminal itself may measure proximity and distant states of the finger of the user for the terminal and durations corresponding to the two states. For example, the user may simulate a knocking action for three times above the terminal within 10 seconds, herein a duration is 3 seconds when the knocking action is simulated for the second time to simulate knocking; and durations are 1 second respectively when the knocking action is simulated for the first time and the third time; and every time after completing simulation of the knocking action, the duration for which the user raises the finger far away from the terminal is 1 second. Therefore, a first proximity state sequence which may be obtained by the proximity sensor is: {(proximity, 1 second), (distant, 1 second), (proximity, 3 seconds), (distant, 1 second), (proximity, 1 second), (distant, 1 second)}.

It can be understood that the first proximity state sequence replaces a password input step, and the proximity sensor captures the actions of the user instead of password input. Moreover, the actions, captured by the proximity sensor, of the user may usually be casual actions and is unlikely to attract attentions, thereby avoiding the problem of password leakage, improving the security of the terminal.

In an exemplary embodiment, to prevent the terminal from receiving a wrong first proximity state sequence due to a misoperation of the first object, the terminal may also confirm that reception of the first proximity state sequence is completed after receiving the first proximity state sequence of the first object within the first time threshold value.

Specifically, the operation that the terminal confirms that reception of the first proximity state sequence is completed may include that the following operations.

The terminal prompts a reception confirmation message. Herein, the reception confirmation message is used to request for confirming that reception of the first proximity state sequence is completed. For example, the terminal may display the reception confirmation message on a display screen of the terminal to let the user confirm whether input is completed to confirm that reception of the first proximity state sequence is completed.

After the terminal receives a confirmation response message, the terminal confirms that reception of the first proximity state sequence is completed. Herein, the confirmation response message is used to respond to the reception confirmation message.

In step S102, the terminal compares the first proximity state sequence with a preset reference proximity state sequence.

Exemplarily, the preset reference proximity state sequence includes proximity states arranged according to a preset order and durations corresponding to the proximity states.

The step that the terminal compares the first proximity state sequence with the preset reference proximity state sequence may include that the following operations.

The terminal searches for a first mapping relationship to obtain password signals represented by the proximity states and the durations corresponding to the proximity states according to the proximity states and durations corresponding to the proximity states in the first proximity state sequence, and combines the password signals into a first password signal flow according to an order of the proximity states in the first proximity state sequence.

The first password signal flow is compared with a preset reference password signal flow.

Specifically, the first mapping relationship may be a corresponding relationship between the proximity states and the durations corresponding to the proximity states, and the password signals. For example, in the embodiment, the proximity state of the first object may be represented by a high-level signal, and the high-level signal is usually represented by "1" . The distant state of the first object may be represented by a low-level signal, and the low-level signal is usually represented by "0". The proximity state of which the duration does not exceed 1 second may be represented by an individual high level, and may be represented by "1" in the present embodiment. The proximity state, of which the duration is larger than or equal to 3 seconds, may be represented by continuous high levels, and may be represented by "111" in the present embodiment. The distant states, of which the duration does not exceed 1 second, may be represented by a low level, and may be represented by "0" in the present embodiment. And the distant states, of which the duration is larger than or equal to 3 seconds, may be represented by continuous low levels, and may be represented by "000" in the present embodiment.

Therefore, the terminal may search for the first mapping relationship to obtain a first password signal flow "10111010" of the first proximity state sequence according to the proximity states and durations corresponding to the proximity states in the first proximity state sequence.

Specifically, the preset reference password signal flow may be obtained by searching for reference proximity states and durations corresponding to the reference proximity states in the reference proximity state sequence by the terminal according to the first mapping relationship.

It shall be illustrated that the reference password signal flow corresponds to the preset reference proximity state sequence through the first mapping relationship, and is pre-stored in the terminal, and is used to be compared with the first password signal flow to determine whether they are the same. In the present embodiment, the pre-stored reference password signal flow may be "10111010".

In step s103, when the first proximity state sequence is as same as the preset reference proximity state sequence, the terminal is changed from the encrypted state into a decrypted state.

Specifically, in the present embodiment, since the pre-stored reference password signal flow is as same as the first password signal flow, the terminal may confirm that the first proximity state sequence is as same as the preset reference proximity state sequence. At the moment, the terminal may change its own encrypted state into the decrypted state.

Understandably, in the present embodiment, that the terminal is in the encrypted state may include that: the terminal is in a screen locked state, any file in the terminal is in the encrypted state and any application program in the terminal is in the encrypted state.

Correspondingly, the step that the terminal is changed from the encrypted state into the decrypted state includes that: the terminal unlocks a screen, any file in the terminal is in the decrypted state, and any application program in the terminal is in the decrypted state.

An embodiment of the present invention provides a method for decrypting a terminal. By the method, proximity and distant states of an external object are acquired through the proximity sensor, and a decryption operation is performed on the encrypted terminal according to the acquired proximity and distant states of the external object, so that information security of the terminal can be improved.

Referring to FIG. 2, it shows a structure of a terminal 20 according to an embodiment of the present invention. The terminal 20 includes a proximity sensor 201, a processor 202 and a memory 203.

Herein, the proximity sensor 201 may be located at a front panel part of the terminal 20, emits infrared light through an infrared emitter, and then detects an amount of infrared light, which is reflected back, through an infrared detector in the proximity sensor. When there is an object on an infrared emission path, most of infrared rays are reflected back to the infrared detector inside the proximity sensor, and the infrared detector can judge the amount of the received infrared rays which are reflected back to determine a proximity or distant state of the object.

The memory 203 may include more than one computer-readable storage medium, and may include a high speed Random Access Memory RAM, and may also include a non-volatile memory, such as at least one disk memory. Moreover, the memory 203may not only include an internal memory but also include an external memory.

Specifically, the proximity sensor 201 is arranged to, when the terminal 20 is in an encrypted state, receive a first proximity state sequence of a first object within a first time threshold value set by the processor 202, and transmit the first proximity state sequence to the processor 202.

The memory 203 is arranged to store a preset reference proximity state sequence.

The processor 202 is arranged to compare the first proximity state sequence transmitted by the proximity sensor 201 with the reference proximity state sequence stored by the memory 203, and
when the first proximity state sequence is as same as the preset reference proximity state sequence, change the terminal 20 from the encrypted state into a decrypted state.

Exemplarily, the first proximity state sequence includes proximity states arranged according to an order of acquiring the proximity states by the terminal and durations corresponding to the proximity states. The preset reference proximity state sequence includes proximity states arranged according to a preset order and durations corresponding to the proximity states. The proximity states in the first proximity state sequence may include a state that a distance between the first object and the terminal is smaller than a first distance threshold value and/or a state that the distance between the first object and the terminal is larger than the first distance threshold value.

Exemplarily, the memory 203 is also arranged to store a first mapping relationship, herein the first mapping relationship is a corresponding relationship between the proximity states and the durations corresponding to the proximity states, and password signals.

The processor 202 is arranged to search for the first mapping relationship to obtain the password signals represented by the proximity states and the durations corresponding to the proximity states according to the proximity states and durations corresponding to the proximity states in the first proximity state sequence, combine the password signals into a first password signal flow according to an order of the proximity states in the first proximity state sequence, and
compare the first password signal flow with a preset reference password signal flow. Herein, the preset reference password signal flow is obtained by searching for reference proximity states and durations corresponding to the reference proximity states in the reference proximity state sequence by the processor 202 according to the first mapping relationship.

Furthermore, the processor 202 is also arranged to confirm that reception of the first proximity state sequence is completed.

Specifically, as shown in FIG. 3, the terminal 20 also includes a communication interface 204, arranged to perform communication interaction with the outside.

The processor 202 is arranged to prompt a reception confirmation message through the communication interface 204. Herein, the reception confirmation message is used to request for confirming that reception of the first proximity state sequence is completed, and
after receiving a confirmation response message through the communication interface 204, confirm that reception of the first proximity state sequence is completed. Herein, the confirmation response message is used to respond to the reception confirmation message.

The embodiment of the present invention also records a terminal 20. In the terminal 20, proximity and distant states of an external object are acquired through the proximity sensor 201, and a decryption operation is performed on the encrypted terminal according to the acquired proximity and distant states of the external object, so that information security of the terminal 20 can be improved.

The embodiment of the present invention also records a storage medium, and a computer program is stored in the storage medium, and the computer program is arranged to execute the method for decrypting a terminal in the abovementioned various embodiments.

Those skilled the art should know that embodiments of the present invention may be provided as a method, a system or a computer program product. Therefore, the present invention may adopt a form of pure hardware embodiment, pure software embodiment and embodiment combining software and hardware aspects. Moreover, the present invention may adopt a form of computer program product implemented on one or more computer-available storage media (including, but not limited to, a disk memory and an optical memory) including computer-available program codes.

The present invention is described with reference to flowcharts and/or block diagrams of the method, equipment (system) and computer program product according to embodiments of the present invention. It should be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of other programmable data processing equipment to generate a machine, so that a device for realizing a function specified in one flow or more flows in the flowcharts and/or one block or more blocks in the block diagrams is generated by the instructions executed through the computer or the processor of the other programmable data processing equipment.

These computer program instructions may also be stored in a computer-readable memory capable of guiding the computer or the other programmable data processing equipment to work in a specific manner, so that a product including an instruction device may be generated by the instructions stored in the computer-readable memory, and the instruction device realizes the function specified in one flow or many flows in the flowcharts and/or one block or many blocks in the block diagrams.

These computer program instructions may further be loaded onto the computer or the other programmable data processing equipment, so that a series of operating steps are executed on the computer or the other programmable data processing equipment to generate processing implemented by the computer, and steps for realizing the function specified in one flow or many flows in the flowcharts and/or one block or many blocks in the block diagrams are provided by the instructions executed on the computer or the other programmable data processing equipment.

The above are only the alternative embodiments of the present invention and not intended to limit the scope of protection of the present invention.

### Industrial Applicability

According to the present invention, the proximity and distant states of an external object are acquired through a proximity sensor, and the decryption operation is performed on the encrypted terminal according to the acquired proximity and distant states of the external object, so that the information security of the terminal can be improved.

## Claims

1. A method for decrypting a terminal, comprising:
receiving, by a terminal, a first proximity state sequence of a first object within a first time threshold value when in an encrypted state, wherein the first proximity state sequence comprises proximity states arranged according to an acquisition order of the terminal and durations corresponding to the proximity states;
comparing, by the terminal, the first proximity state sequence with a preset reference proximity state sequence, wherein the preset reference proximity state sequence comprises proximity states arranged according to a preset order and durations corresponding to the proximity states; and
when the first proximity state sequence is as same as the preset reference proximity state sequence, changing the terminal from the encrypted state into a decrypted state.

2. The method according to claim 1, wherein the proximity states in the first proximity state sequence comprise a state that a distance between the first object and the terminal is smaller than a first distance threshold value and/or a state that the distance between the first object and the terminal is larger than the first distance threshold value.

3. The method according to claim 2, wherein comparing, by the terminal, the first proximity state sequence with a preset reference proximity state sequence comprises:
Searching for, by the terminal, a first mapping relationship to obtain password signals represented by the proximity states and the durations corresponding to the proximity states according to the proximity states and the durations corresponding to the proximity states in the first proximity state sequence, and combining the password signals into a first password signal flow according to an order of the proximity states in the first proximity state sequence, wherein the first mapping relationship is a corresponding relationship between the proximity states and the durations corresponding to the proximity states, and the password signals; and
comparing the first password signal flow with a preset reference password signal flow, wherein the preset reference password signal flow is obtained by searching for reference proximity states and durations corresponding to the reference proximity states in the reference proximity state sequence by the terminal according to the first mapping relationship.

4. The method according to claim 1, wherein, after receiving, by a terminal, a first proximity state sequence of a first object within a first time threshold value, the method further comprises:
prompting, by the terminal, a reception confirmation message; wherein the reception confirmation message is used to request for confirming that reception of the first proximity state sequence is completed; and
confirming, by the terminal, that the reception of the first proximity state sequence is completed after the terminal receives a confirmation response message, wherein the confirmation response message is used to respond to the reception confirmation message.

5. The method according to claim 1, wherein that the terminal is in the encrypted state comprises that: the terminal is in a screen locked state, any file in the terminal is in the encrypted state and any application program in the terminal is in the encrypted state; and
correspondingly, changing the terminal from the encrypted state into the decrypted state comprises: the terminal unlocks a screen, any file in the terminal is in the decrypted state, and any application program in the terminal is in the decrypted state.

6. A terminal, comprising: a proximity sensor, a processor and a memory, wherein,
the proximity sensor is arranged to, when in an encrypted state, receive a first proximity state sequence of a first object within a first time threshold value set by the processor, and transmit the first proximity state sequence to the processor, wherein the first proximity state sequence comprises proximity states arranged according to an acquisition order of the terminal and durations corresponding to the proximity states;
the memory is arranged to store a preset reference proximity state sequence, wherein the preset reference proximity state sequence comprises proximity states arranged according to a preset order and durations corresponding to the proximity states; and
the processor is arranged to compare the first proximity state sequence transmitted by the proximity sensor with the reference proximity state sequence stored by the memory, and
when the first proximity state sequence is as same as the preset reference proximity state sequence, change the terminal from the encrypted state into a decrypted state.

7. The terminal according to claim 6, wherein the proximity states in the first proximity state sequence comprise a state that a distance between the first object and the terminal is smaller than a first distance threshold value and/or a state that the distance between the first object and the terminal is larger than the first distance threshold value.

8. The terminal according to claim 7, wherein,
the memory is also arranged to store a first mapping relationship, wherein the first mapping relationship is a corresponding relationship between the proximity states and the durations corresponding to the proximity states, and password signals; and
the processor is arranged to search for the first mapping relationship to obtain the password signals represented by the proximity states and the durations corresponding to the proximity states according to the proximity states and durations corresponding to the proximity states in the first proximity state sequence, combine the password signals into a first password signal flow according to an order of the proximity states in the first proximity state sequence, and
compare the first password signal flow with a preset reference password signal flow, wherein the preset reference password signal flow is obtained by searching for reference proximity states and durations corresponding to the reference proximity states in the reference proximity state sequence by the processor according to the first mapping relationship.

9. The terminal according to claim 6, wherein the terminal further comprises a communication interface, arranged to perform communication interaction with outside; and
the processor is arranged to prompt a reception confirmation message through the communication interface, wherein the reception confirmation message is used to request for confirming that reception of the first proximity state sequence is completed, and
after receiving a confirmation response message through the communication interface, confirm that reception of the first proximity state sequence is completed, wherein the confirmation response message is used to respond to the reception confirmation message.

10. A storage medium where a computer program is stored, wherein the computer program is configured to execute the method for decrypting a terminal according to any one of claims 1-5.
